# EUROPEAN PATENT APPLICATION

(11) **EP 2 234 067 A1**
(43) Date of publication of application: **29.09.2010**
(21) Application number: 10250276.2
(22) Date of filing: 17.02.2010
(51) Int. Cl.: G06T 13/00, G06T 15/70

(54) **Method and system for transitioning between views in a traffic report**

(30) Priority: 05.03.2009 US 398305
(71) Applicant: Navteq North America, LLC, Chicago, Illinois 60606 (US)
(72) Inventor: Swope III, Howard M., Exton, PA 19341 (US); Petti, Emmanuel M., No. 172 Mariton, NJ 08053 (US); Soulchin, Robert M., King of Prussia, PA 19406 (US)
(74) Representative: Palmer, Jonathan R.

(57) **Abstract**

A method and system for transitioning between views in a traffic report are disclosed. The transition involves having the elements of both the 2D map and the 3D virtual world spatially located in the same virtual world. The transition involves moving from one part of the virtual world to another part of the virtual world while fading out the elements that are specific to the first type of graphic and showing elements that are specific to the second type of graphic. The view can be seamlessly transitioned between the 2D map view and the 3D world view, or between two different 3D world views.

## Description

### FIELD

The present invention relates generally to traffic reports, and more specifically transitioning between two views used in a visual traffic report.

### BACKGROUND

Most drivers have been impacted by traffic delays. Traffic delays are caused by one or more traffic incidents, such as congestion, construction, an accident, a special event (e.g., concerts, sporting events, festivals), a weather condition (e.g., rain, snow, tornado), and so on. Many television stations provide a traffic report in their news reports to provide viewers with information regarding current traffic conditions. Some television stations use graphics when presenting traffic information.

For example, U.S. Patent No. 7,116,326, which is assigned to the same assignee of the present application, describes how a television station can display a traffic flow map that visually shows an animated graphic of the traffic conditions on one or more roadways in and around a metropolitan area. The traffic flow map is automatically generated from real or near real time traffic flow data and changes as the actual, current traffic conditions change.

The television station may provide different views of the animated traffic flow. For example, U.S. Patent Application Publication No. 2006/0247850, which is assigned to the same assignee of the present application, describes three views: a two-dimensional (2D) overhead map, a Skyview map, and a three-dimensional (3D) fly-through map. The 2D overhead map depicts traffic conditions from the perspective of a viewer looking down at a point on a map. The Skyview map is a 3D representation that includes buildings, terrain, and other landmarks. Similar to the 2D overhead map, the Skyview map depicts traffic conditions focused at a point in the 3D world. The 3D fly-through map is a dynamic presentation of a 3D world detailing traffic conditions along a selected roadway or series of roadways.

While these views allow a user to more easily comprehend the current traffic conditions, there continues to be room for new features and improvements in providing traffic reports. One area for improvement is transitioning between views. Transitioning between one 2D view to another 2D view is relatively straightforward. The virtual camera is positioned looking down at a map and moves from one point to another on the map. However, the transition between a 2D view and a 3D view, or between two different 3D views is more complex.

In the past, a cut and fade type of transition has been used to transition between two different types of views. However, a cut and fade type of transition may disorient the viewer causing the viewer to spend time identifying the new location that they are viewing. As a result, the viewer to miss the significance of the traffic report being presented. Thus, it would be beneficial to transition between two views in a manner that provides the viewer with context regarding the geographic location depicted in the second view.

### SUMMARY

A method and system for transitioning between two types of geographic graphics (i.e., views) in a traffic report is disclosed. The transition may be from a 2D view to a 3D view, from a 3D view to a 2D view, or between two different 3D views. To allow the viewer of the traffic report to have context for both the first view and the second view, elements of both views are located in the same virtual world. As the traffic report moves from one part of the virtual world to another part of the virtual world, elements that are specific to the first view fade away as elements that are specific to the second view are displayed. In this way, the viewer sees both parts of the virtual world during at least part of the transition.

These as well as other aspects and advantages will become apparent to those of ordinary skill in the art by reading the following detailed description, with reference where appropriate to the accompanying drawings. Further, it is understood that this summary is merely an example and is not intended to limit the scope of the invention as claimed.

### BRIEF DESCRIPTION OF THE DRAWINGS

Presently preferred embodiments are described below in conjunction with the appended drawing figures, wherein like reference numerals refer to like elements in the various figures, and wherein:
Figure 1 is a block diagram of a system used for transitioning between views in a traffic report, according to an example;
Figure 2 is a flow chart of a method of transitioning between views in a traffic report, according to an example;
Figure 3 is a diagram of camera movement for a 2D view to a 3D view transition, according to an example;
Figures 4-8 are screen shots depicting an example transition from a 2D view to a 3D view;
Figure 9 is a diagram of camera movement for a 3D view to a 2D view transition, according to an example;
Figures 10-13 are screen shots depicting an example transition from a 3D view to a 2D view;
Figure 14 is a diagram of camera movement for a 3D view to a 3D view transition, according to an example;
Figures 15-18 are screen shots depicting an example transition from a 3D view to another 3D view; and
Figure 19 is a diagram of camera movement for a 3D view to a 3D view transition, according to another example.

### DETAILED DESCRIPTION

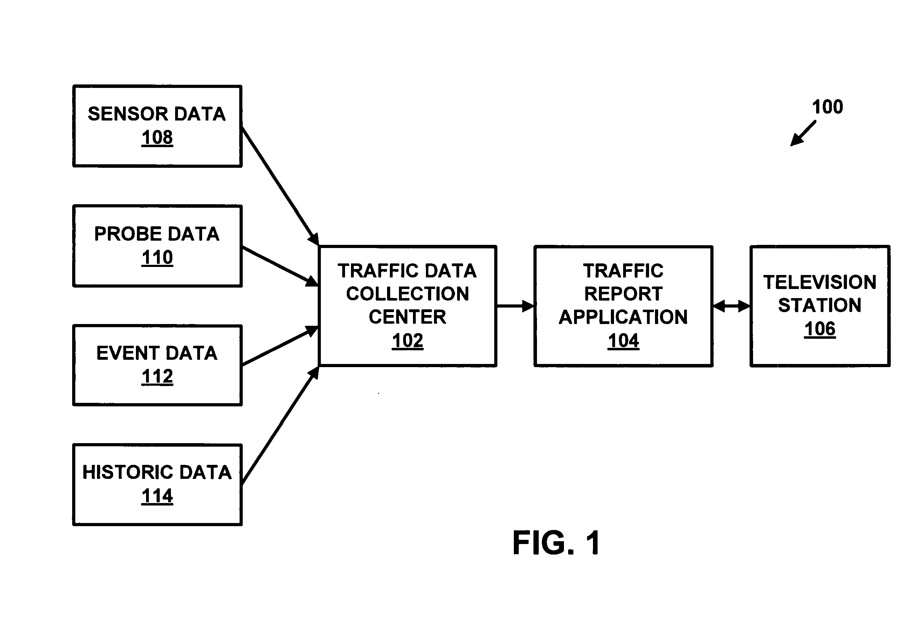

Figure 1 is a block diagram of a system 100 that may be used to transition between views in a traffic report. The system 100 includes a traffic data collection center 102 and a traffic report application 104. The traffic data collection center 102 receives data regarding traffic conditions from a variety of sources and provides a traffic data output to the traffic report application 104. The traffic report application 104 uses the traffic data output along with user inputs to generate a video output that can be used by a television station 106 or other end user, such as a web-based or cellular-based application, to present information regarding current traffic conditions to viewers.

The traffic data collection center 102 receives sensor data 108, probe data 110, and/or event data 112. The sensor data 108 is data collected from roadway sensors. The sensors may use radar, acoustics, video, and embedded loops in the roadway to collect data that can be used to characterize traffic conditions. For example, the sensor data 108 may include speed, volume (number of vehicles passing the sensor per period of time), and density (percentage of the roadway that is occupied by vehicles). The sensor data 108 may include other data types as well, such as vehicle classification (car, truck, motorcycle). The sensor data 108 is generally collected in real time (i.e., as it occurs) or at near real time.

The probe data 110 is point data collected from a moving vehicle having a device that can identify vehicle position as a vehicle travels along a road network. For example, the device may use cellular technology or Global Positioning Satellite (GPS) technology to monitor the vehicle's position on the road network. By monitoring the vehicle's movement, the probe data 110 can be used to determine travel time, which can then be used to calculate speed of the vehicle. The probe data 110 is generally collected in real time or at near real time.

The event data 112 is traffic data regarding a traffic event. A traffic event is an occurrence on a road system that may impact the flow of traffic. Traffic events include incidents and weather. An incident is a traffic event that obstructs the flow of traffic on the road system or is otherwise noteworthy in reference to traffic. Example incidents include accidents, congestion, construction, disabled vehicles, and vehicle fires.

A traffic operator may enter the event data 112 into a Traffic Incident Management System (TIMS), such as the TIMS described in U.S. Patent Publication No. 2004/0143385, which is assigned to the same assignee as the current application. U.S. Patent Publication No. 2004/0143385 is hereby incorporated by reference in its entirety. A traffic operator is a person who gathers traffic information from a variety of sources, such as by monitoring emergency scanner frequencies, by viewing images from cameras located adjacent to a roadway, and by calling government departments of transportation, police, and emergency services. In addition, the traffic operator may obtain traffic data from aircraft flying over the road network.

The traffic operator may enter event data 112 using TIMS edit screens, which present the traffic operator with a menu to select the type of information entered for a particular type of incident. The TIMS uses a series of forms to prompt the traffic operator for relevant information to be entered. The forms and fields used depend on the type of traffic information to be entered and what type of information is available. For example, the traffic information entered by the traffic operator may be related to weather, an accident, construction, or other traffic incident information.

The traffic data collection center 102 may also have access to historical traffic data 114. The historical traffic data 114 may include travel time, delay time, speed, and congestion data for various times of the day and days of the week. The traffic data collection center 102 may use the historical traffic data 114 to predict clearance time for a traffic event, to predict traffic conditions when sensor data 108, probe data 110, and/or event data 112 is unavailable for a particular roadway, or for any other suitable purpose.

The traffic data collection center 102 includes a combination of hardware, software, and/or firmware that collects the received sensor, probe, event, and historical traffic data 108-114, analyzes the data 108-114, and provides a traffic data output to applications that use traffic data. For example, the traffic data collection center 102 may be a virtual geo-spatial traffic network (VGSTN) as described in U.S. Patent Publication No. 2004/0143385. Other systems for collecting, analyzing, and providing traffic data in a format that can be used by applications may also be used.

The traffic data collection center 102 analyzes sensor data 108 and probe data 110 to determine whether congestion is building, steady, or receding on a roadway. Additionally, the traffic data collection center 102 integrates the sensor data 108 and probe data 110 with the collected event data 112. The integrated data is mapped using a geographic database to produce a virtual traffic network representing traffic conditions on a road network. In one embodiment, the geographic database is a geographic database published by NAVTEQ North America, LLC of Chicago, Illinois.

The traffic data collection center 102 provides a traffic data output to the traffic report application 104. The traffic data output may be a traffic feed, such as an RSS or XML feed. The traffic report application 104 uses the traffic data output and inputs from a user to create a video output for a traffic report that can be used by the television station 106. For example, the traffic report application 104 may be the NeXgen television traffic reporting application as described in U.S. Patent Publication No. 2006/0247850, which is hereby incorporated by reference in its entirety. Other applications that can create a traffic report using traffic data may also be used.

The NeXgen application uses the traffic data output to create data-driven maps and informational graphics of traffic conditions on a road system for display on a video device. With the NeXgen application, traffic maps and informational graphics do not need to be pre-rendered into movies, thus providing a dynamic view of traffic data on a road system. Specifically, 2D and 3D traffic maps and informational graphics change as traffic data changes in real or near real time. Also, with the NeXgen application, the traffic report is dynamically created to illustrate the traffic data that the user selects.

While the traffic report application 104 is depicted in Figure 1 as a stand-alone entity, it is understood that the traffic report application 104 may be co-located with either the traffic data collection center 102 or the television station 106. Additionally, the output from the traffic report application 104 may be provided to end users other than the television station 106. For example, the traffic report application 104 may provide an output to a web-based application or a cellular application.

Prior to running the traffic report application 104, an artist uses a graphics application, such as commercially available Autodesk^{®} 3ds Max^{®}, to create the graphics for a virtual world. The virtual world is a computer generated representation of a portion of a road network in a geographic region. Included in the virtual world are representations of the road network, terrain features (including water features), buildings, and other landmarks in the real world that may assist a viewer of a traffic report in identifying the portion of the road network depicted in the report. Also included in the virtual world are informational graphics, such as road shields, street names, and banners, that may also assist a viewer of a traffic report in identifying the portion of the road network depicted in the report.

Using the Autodesk^{®} 3ds Max^{®} example, the artist creates a scene file for the virtual world. The scene file includes objects that are organized into a scene graph. The scene graph is a collection of nodes in a graph or tree structure. A node may have many children but often only a single parent, with the effect of a parent apparent to all its child nodes. The nodes are enabled or disabled depending on whether they are to be included in a traffic report or not.

Using this scene graph organization capability, objects are organized such that those that apply only to 2D map views of the world are grouped together and those that only apply to 3D world views of the world are grouped together. If there are objects that are in used in both types of view, these objects are grouped together in a separate group. The 2D map view objects include objects such as solid map-like colored road lines and the map background. The 3D view objects include objects such as 3D landmarks, terrain, realistic roads, and so on.

Another application, such as Gamebryo 3ds Max design time plugin, may be used to create a runtime graphics data file (e.g., a .nif file) that the traffic report application 104 uses to create the video output sent to the television station 106 or other end user. In addition, the Gamebryo perspective camera model, which takes the camera's position, viewing point, and normal vector as input, may be used to change the direction and perspective of a view. These inputs may be initially specified by the artist; however, the default camera positions and viewpoint may be overridden by the user. For example, a television producer may rotate and tilt the view of the road network for a desired presentation.

To change transparency of objects in a view, the traffic report application 104 uses the capabilities of the Gamebryo runtime graphics engine. This engine has the capability to alter the transparency level of objects in the scene graph. Additionally or alternatively, an artist may create various texture images for objects in the scene. The various textures for a given object have increasing levels of transparency. The artist may use an image editing program, such as Photoshop, to create the texture images. At runtime, the Gamebryo runtime graphics engine may switch the textures on the objects to alter the visibility of the objects. Other methods for changing the transparencies of objects may also be used.

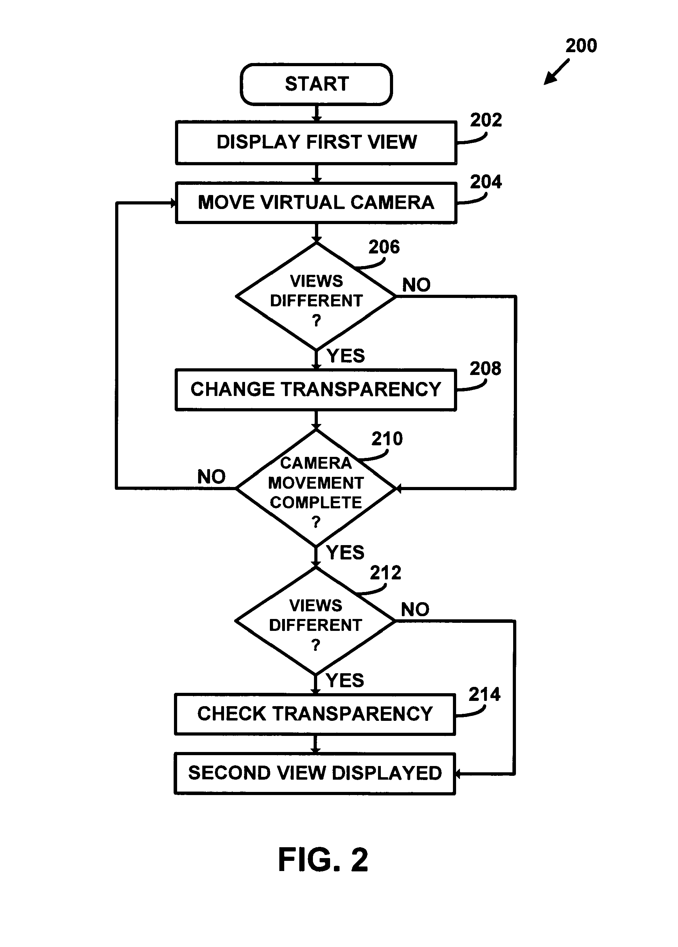

The user can select a rundown of views to show in a traffic report. A rundown is a list of views that a user would like to present to a viewer of the traffic report. The list of views may include a combination of 2D and 3D views of the selected portion of the road network. The traffic report moves from view to view using smooth, seamless transitions as described with respect to Figure 2.

Figure 2 is a flow chart of a method 200 for transitioning between views in a traffic report. The transition may be between a 2D view and a 3D view (ie., 2D to 3D or 3D to 2D) or between two different 3D views. The method 200 connects two different types of graphic presentations (i.e., views) to create a geographically relevant transition.

At block 202, the traffic report application 104 displays a first view. The first view includes objects for the specific type of view. Preferably, these objects are fully visible. The first view does not include objects that are specific to only the second view. These second view objects are fully transparent.

At block 204, the traffic report application 104 manipulates a virtual camera (e.g., the Gamebryo perspective camera model) to depict movement from one part of the virtual world towards another part of the virtual world. The actual camera movement algorithm that is employed varies depending on the type of the first view and the type of the second view (e.g., 2D view to 3D view, 3D view to 2D view, 3D view to 3D view).

At block 206, the traffic report application 104 analyzes the first and second types of views. The two views are part of a rundown selected by a user of the traffic report application 104. If the views are different, the traffic report application 104 proceeds to block 208. If the views are the same, the traffic report application 104 proceeds to block 210.

At block 208, the traffic report application 104 spatially locates elements of two views in the same virtual world. At least one of the two views is a 3D view. The traffic report application 104 increases the transparency of the objects that are specific to the first view and decreases the transparency of the objects that are specific to the second view. The changing of the transparency may be done at a rate such that the transparency change completes at about the same time as the completion of the camera movement. Alternatively, the transparency changing may be designed to complete at a target time earlier or later than when the camera movement is completed.

At block 210, the traffic report application 104 evaluates whether the camera has reached its final destination. If the camera has not reached its final destination, the method 200 returns to block 204. If the camera has arrived at the second view, the traffic report application 104 checks to see if the first and second views were of different types at block 212. If the views are of the same type, the method 200 ends with the second view displayed.

If the views are different, at block 214, the traffic report application 104 checks the transparency of the objects. The second view elements are preferably completely displayed (i.e., no transparency of the second view elements) and the first view elements are preferably not displayed at all. The first view type elements may be completely hidden by using full transparency or by disconnecting the nodes of the objects in the scene graph from the portion of the scene that is being animated and rendered. The traffic report application 104 makes any adjustment to the transparency as necessary. At this point the transition is completed and the second view is displayed to the viewer.

The method 200 may be used for three different types of transitions: "2D view to 3D view," "3D view to 2D view," and "3D view to 3D view." An example of each of these transition types is described as follows.

### A. TRANSITION FROM 2D VIEW TO 3D VIEW

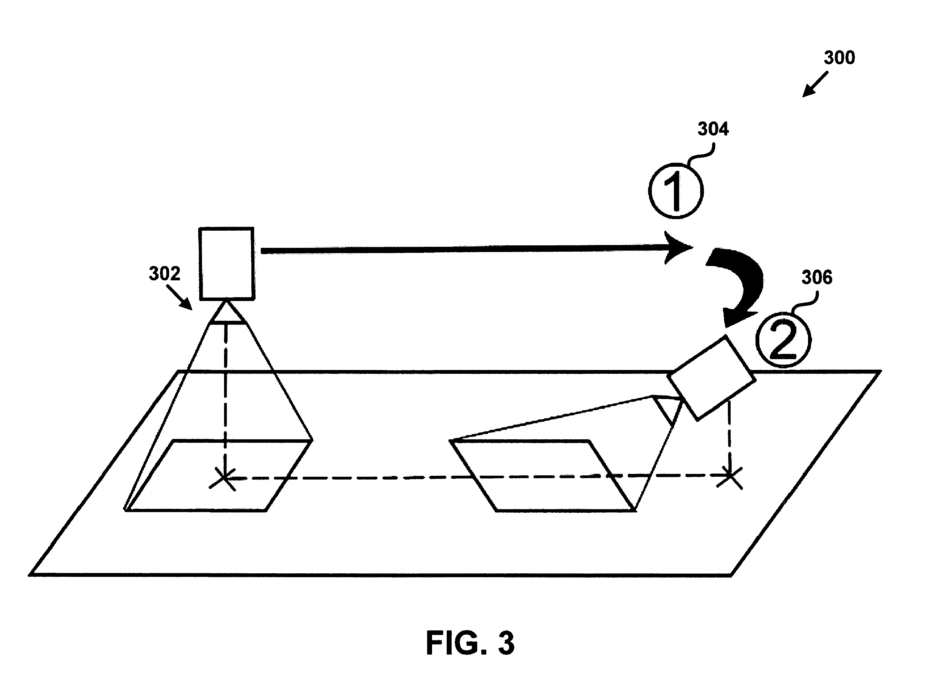

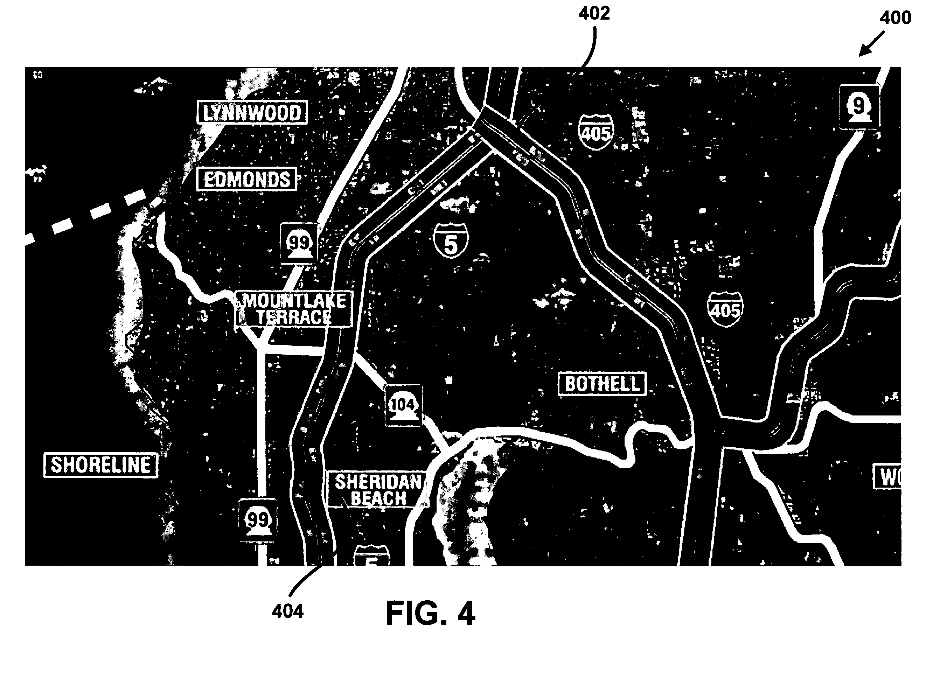

Figure 3 is a camera movement diagram 300 for a 2D view to a 3D view transition. Figures 4-8 are a set of screen shots 400-800 depicting an example transition from a 2D view to a 3D view. The camera movement diagram 300 is explained with reference to the screen shots 400-800.

In the 2D view to 3D view transition, at block 202, the camera position 302 starts by looking down on a 2D map. This downward view of the 2D map is shown in Figure 4. Figure 4 depicts that the 2D map objects are shown (e.g., roads 402 and town name labels 404) and that the 3D view objects are not shown.

At block 204, the virtual camera moves at least part way from the first view towards the second view. For the 2D view to 3D view transition, this movement may be described as having two parts. The first part of the camera movement is to move in approximately a straight line to the second view's camera location 304 as shown in Figure 3. This first movement is done looking straight down with preferably north facing towards the top of the screen.

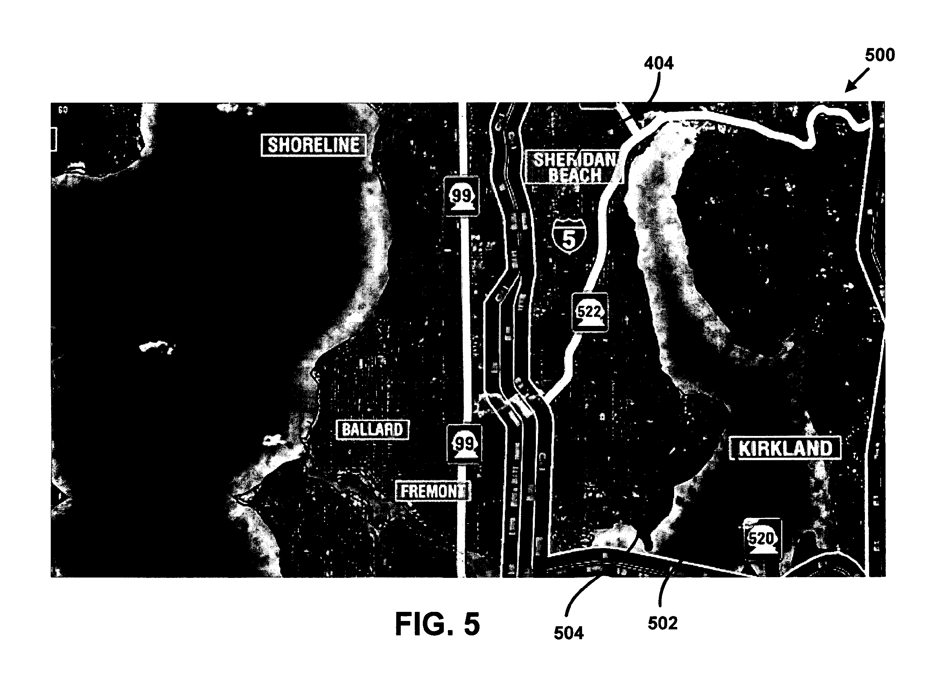

A snapshot of this first movement is depicted in Figure 5. In Figure 5, the camera location is looking straight down, north is facing toward the top of the screen, and the map location is moving south. The fact that the map location is moving south can be seen, for example, by recognizing that the "Sheridan Beach" town name label 404 has moved from the bottom part of the map in Figure 4 to the top part of the map in Figure 5.

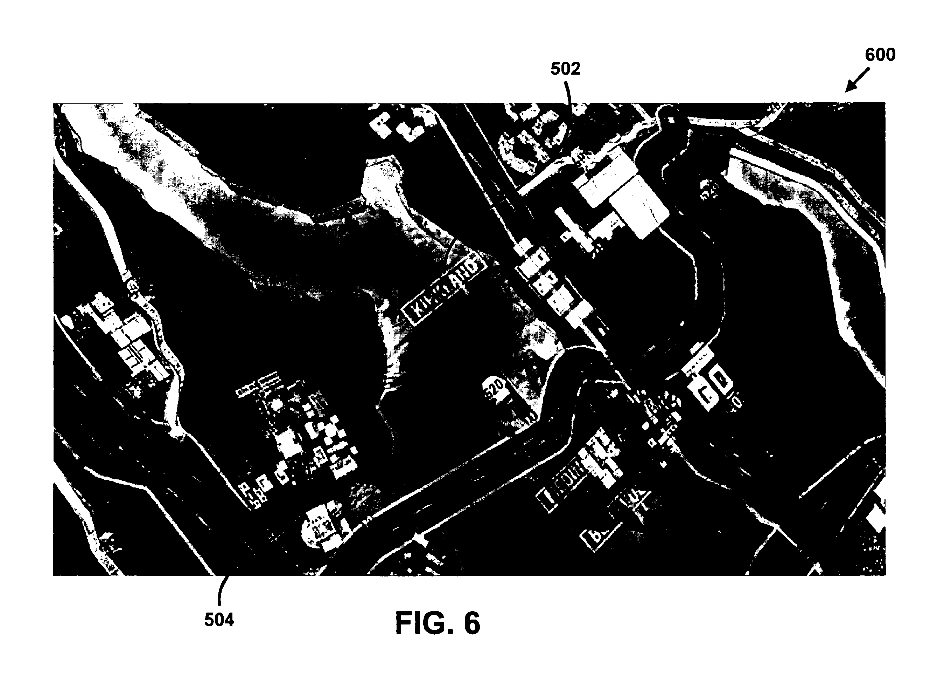

The second part of the 2D to 3D camera movement is to move the camera to the second view's altitude and orientation 306 as shown in Figure 3. This second movement is depicted in Figure 6. Figure 6 shows that the camera position is lower since less of the earth's surface is visible in this view. Figure 6 also shows that the camera is changing its orientation from one where north is towards the top of the screen to one that is moving towards the second view's orientation toward the southeast.

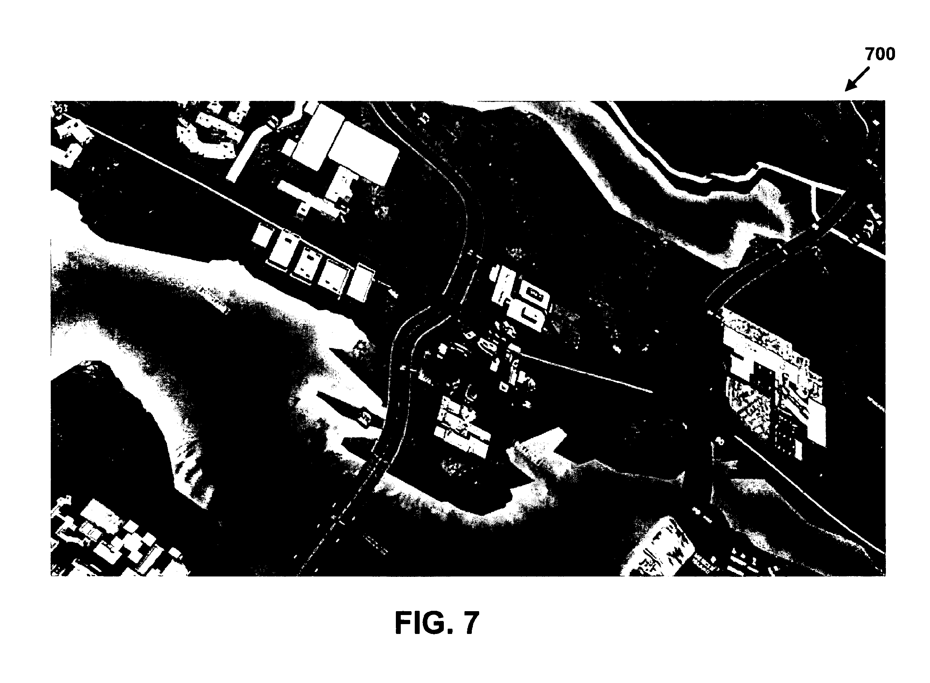

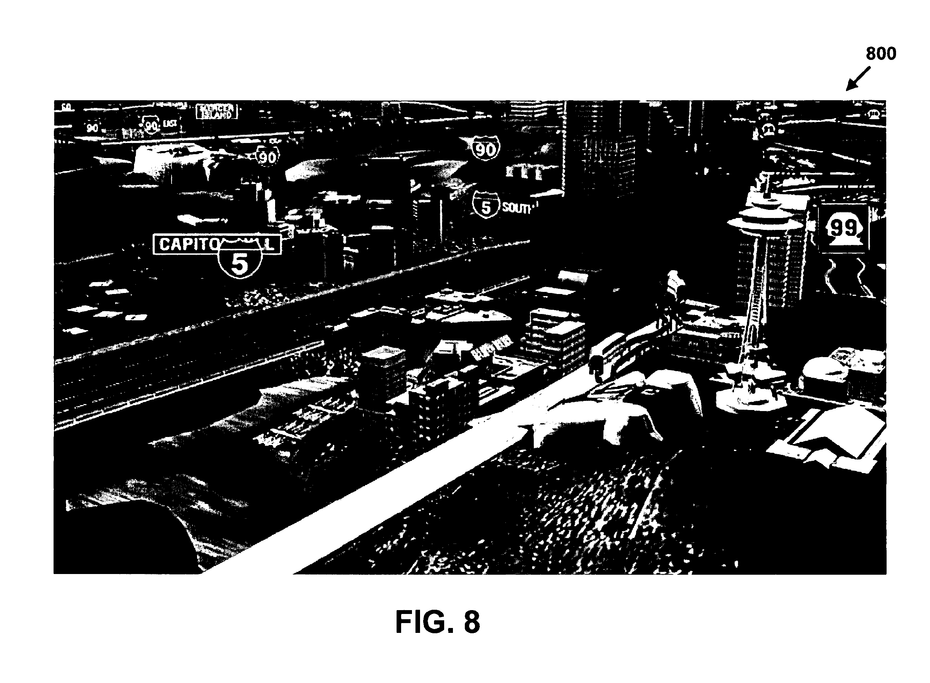

Figure 7 shows the continued decrease in altitude and the change in the orientation from straight down to an angled view with the camera pointed southeast. Figure 8 shows the final camera position and orientation of the second view. When the camera reaches this final position as evaluated at block 210, the camera movement is complete.

Figure 6 also illustrates the change in transparency. In the 2D to 3D transition, the first and second views are two different types of views as evaluated at block 206 and the method 200 continues to block 208. In this case, the transparency is increased for the 2D map items. This transparency increase is shown, for example, by comparing the Kirkland town label 502 in Figure 5 to the increased transparency of the Kirkland town label 502 in Figure 6.

Additionally, the transparency is decreased for the 3D view items. Some of the 3D landmarks 504 are somewhat visible in Figure 6, but are not visible at all in Figure 5 at the same location 504. Once the final camera position is reached in Figure 8, only the 3D view objects can be seen and the 2D view objects are totally transparent. Blocks 212 and 214 in the method 200 ensure that this is the case.

### B. TRANSITION FROM 3D VIEW TO 2D VIEW

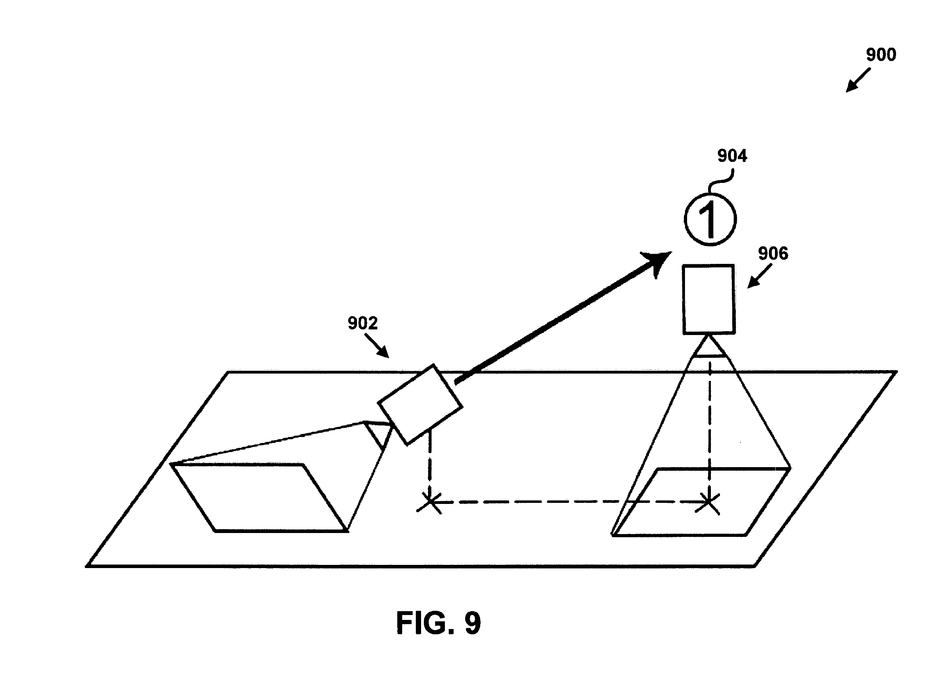

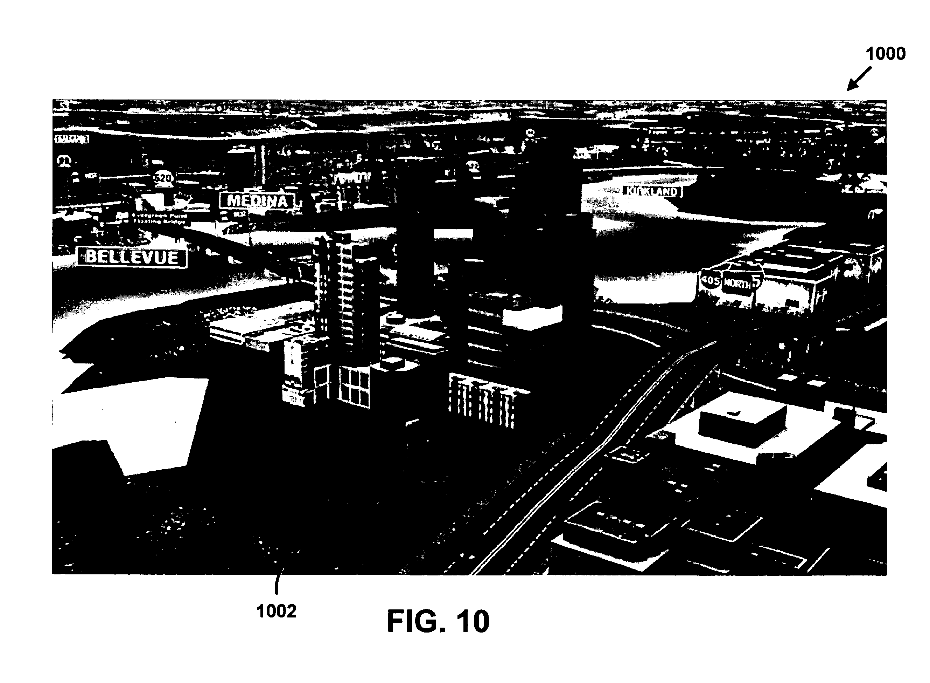

Figure 9 is a camera movement diagram 900 for a 3D view to a 2D view transition. Figures 10-13 are a set of screen shots 1000-1300 depicting an example transition from a 3D view to a 2D view. The camera movement diagram 900 is explained with reference to the screen shots 1000-1300.

The 3D view to 2D view transition may also follow the method 200. The camera movement diagram 900 in Figure 9 shows a starting position 902 of the camera in the 3D view. Figure 10 shows an example 3D view that may be displayed as the first view at block 202. The 3D objects, such as the city landmarks 1002, are shown in this first view, but the 2D map objects are not visible.

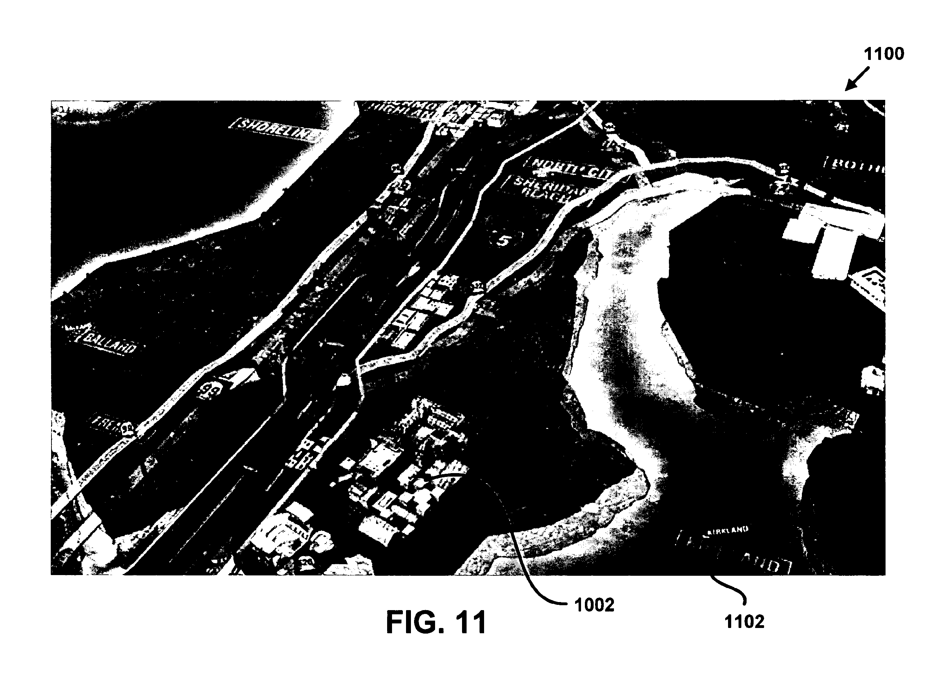

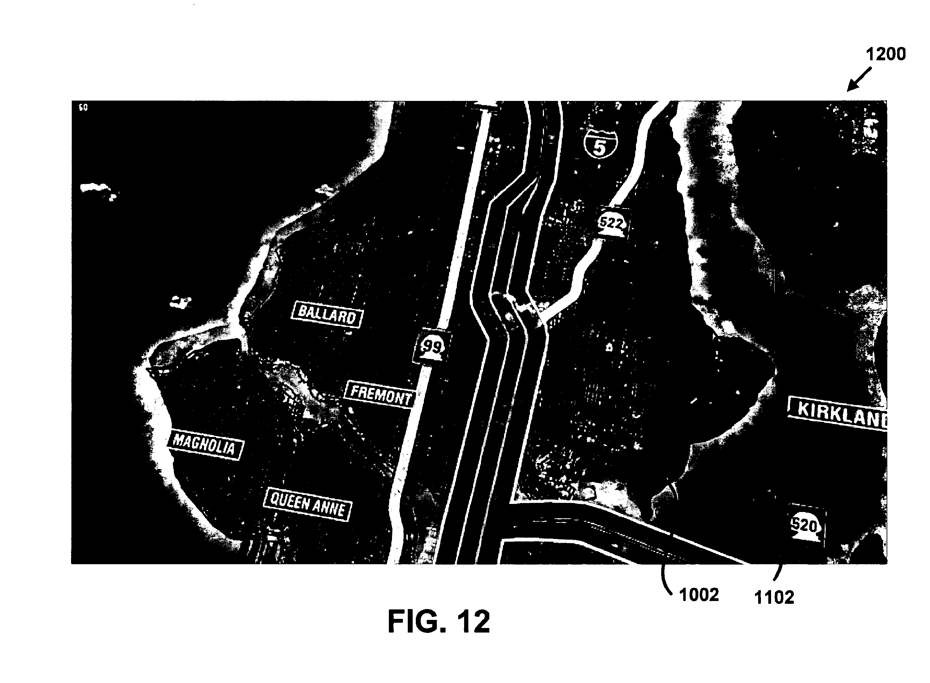

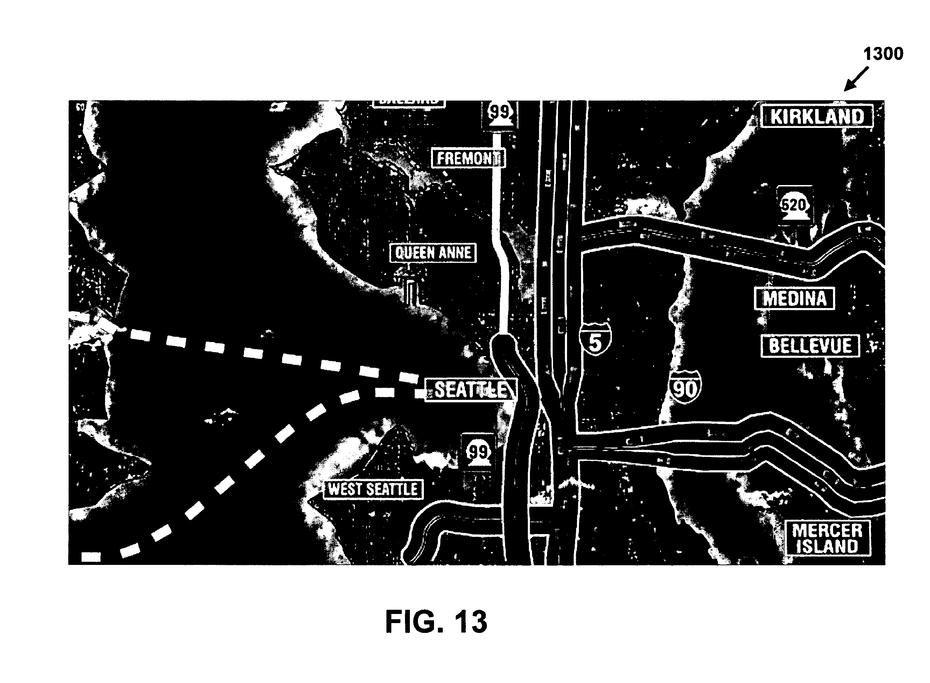

At block 204, the virtual camera moves at least part way from the first view towards the second view. For the 3D view to 2D view, this movement is preferably performed in one step. The camera moves in approximately a straight line to the second view's camera location 904. While moving along this straight line path, the camera orientation moves from a 3D angle view to a straight down view with north preferably facing towards the top of the screen as seen in Figures 11 and 12. Also as seen in Figures 11 and 12, the camera location is moving to a different location relative to the ground and is moving to a higher altitude. This camera movement is completed in Figure 13, which shows the final position and orientation of the second view 906 (the 2D map view). When the camera reaches this position (as evaluated at block 210), the camera movement is complete.

Figures 11 and 12 also illustrate the change in transparency. In the 3D to 2D transition, the first and second views are different types of views as evaluated at block 206 and the method 200 continues to block 208. In this case, the transparency is increased for the 3D map items. This transparency increase is shown, for example, by comparing the city landmark models 1002 in Figure 10 to the increased transparency of the landmarks 1002 in Figure 11. In Figure 12 the city landmarks 1002 are barely visible.

Additionally, the transparency is decreased for the 2D view items. Some of the 2D map town labels 1102 are somewhat visible in Figure 11, but are not visible at all in Figure 10 at the same location. Once the final position is reached in Figure 13, only the 2D view objects can be seen and the 3D view objects are totally transparent. Blocks 212 and 214 in the method 200 ensure that this is the case.

### C. TRANSITION FROM 3D VIEW TO 3D VIEW

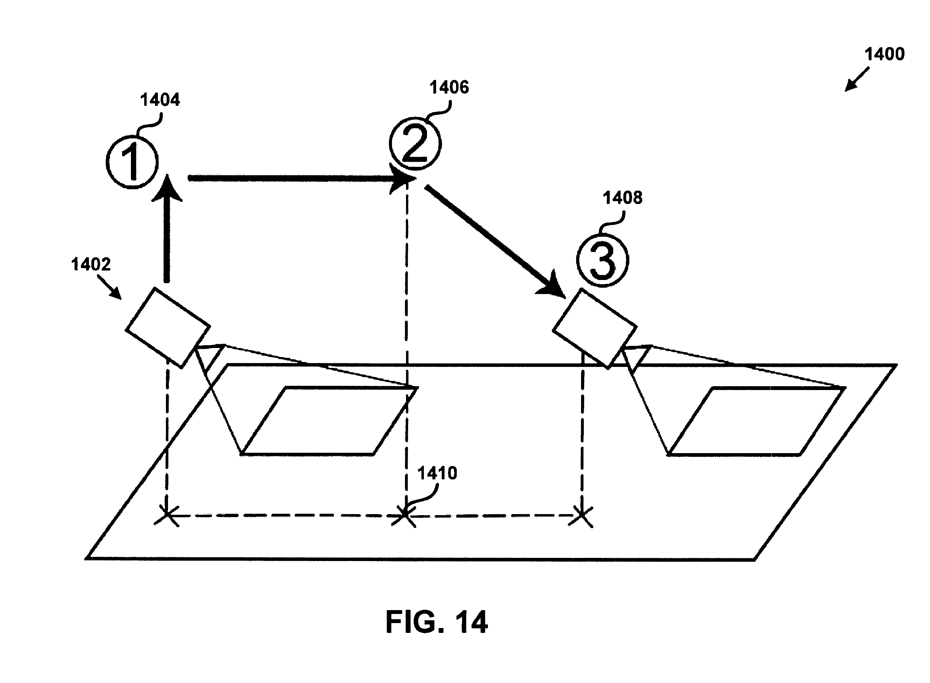

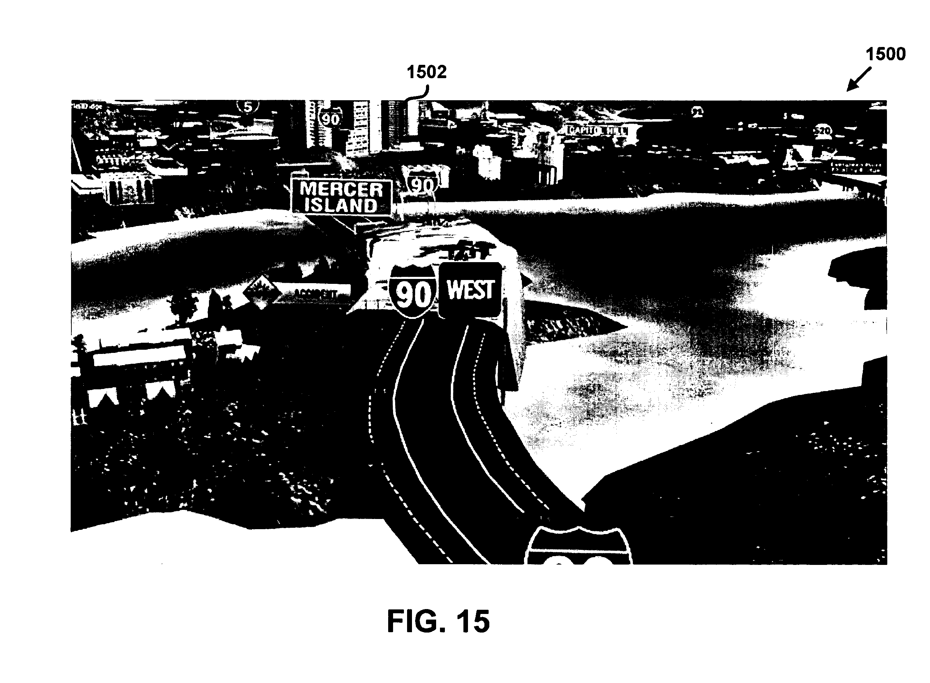

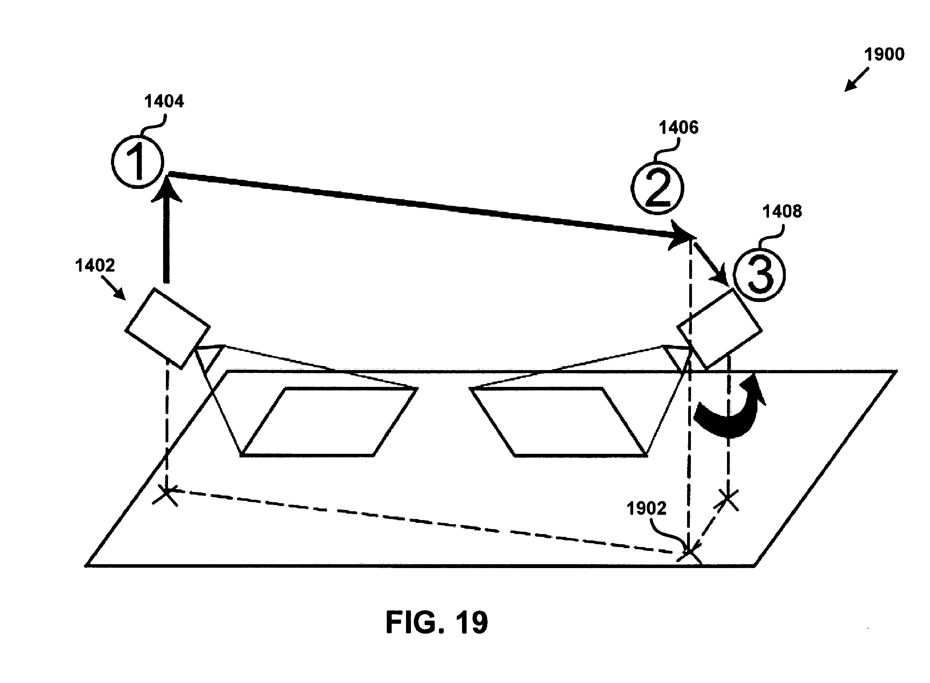

Figure 14 is a camera movement diagram 1400 for a 3D view to a 3D view transition. Figures 15-18 are a set of screen shots 1500-1800 depicting an example transition from a 3D view to a 3D view. The camera movement diagram 1400 is explained with reference to the screen shots 1500-1800. Figure 19 is an alternative camera movement diagram 1900 for a 3D view to a 3D view transition if the second view direction is different than the first view direction.

The 3D view to 3D view transition may also follow the method 200. However, because the first view and the second view are the same type of view as evaluated at blocks 206 and 212, the transparency of the objects are not adjusted at blocks 208, 214. The camera movement diagram 1400 in Figure 14 shows a starting position 1402 of the camera in the first 3D view. Figure 15 shows an example 3D view that may be displayed as the first view at block 202. The 3D objects, such as the city landmarks 1502 are shown in this first 3D view.

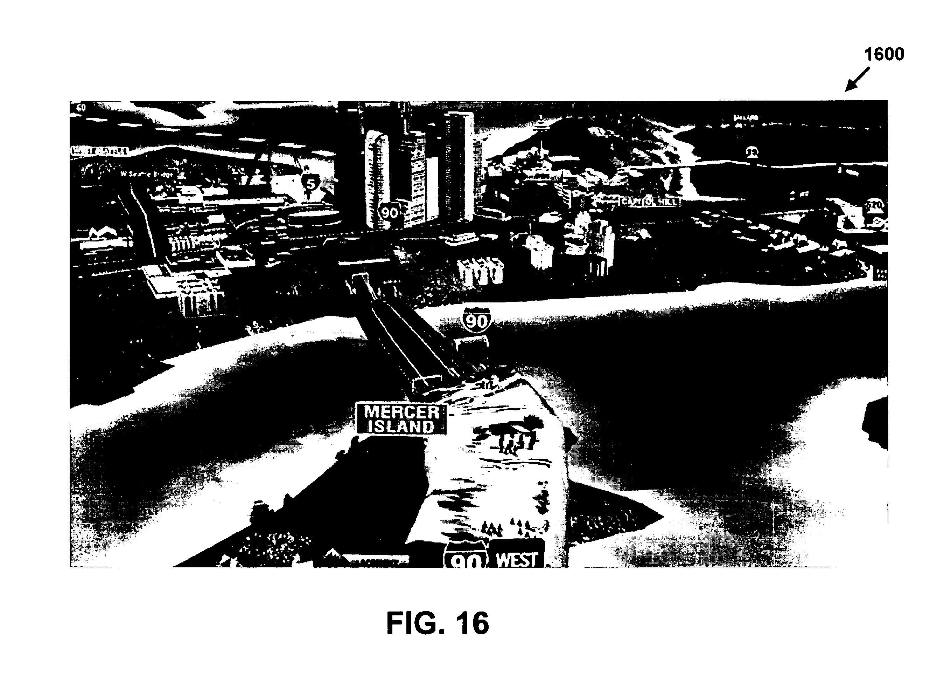

At block 204, the virtual camera moves at least part way from the first view towards the second view. For the 3D view to 3D view transition, this camera movement may be described as having three parts. The first part of the camera movement is to raise the camera's altitude 1404. Figure 16 shows the result of this first movement. The camera altitude in Figure 16 is higher than the camera altitude in Figure 15.

The camera is moved to a higher altitude so that the camera movement to a new location does not intersect with building landmarks. The orientation of the camera is also changed during the camera's elevation. In the horizontal orientation, the target camera orientation is towards the ending location of second movement part. The target vertical angle of the camera is set to a fixed angle relative to the ground.

The second part of the camera movement for 3D view to 3D view transition is to move the camera position to a point 1410 near the final position keeping the altitude and orientation consistent 1406. The camera moves in approximately a straight line to the point 1410.

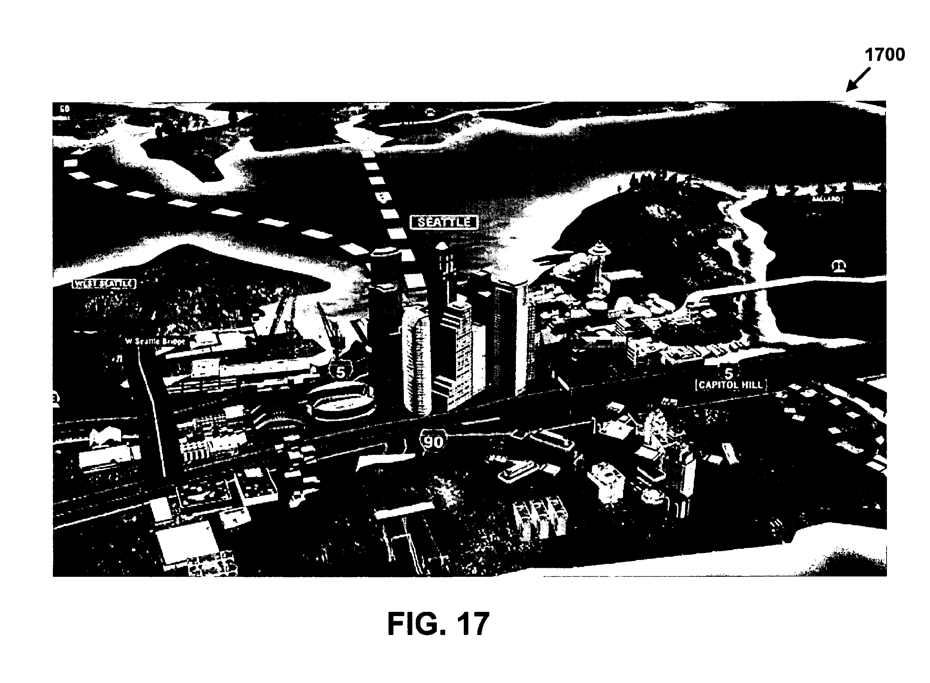

The point 1410 is determined based on the relative camera orientation of the first 3D view and the second 3D view. If the cameras of both views are roughly pointed in the same direction as shown in Figure 14, a point on the way to the second view position is chosen. Figure 17 shows the camera moving to this point along the way to the final location. If the cameras are not pointed in the same approximate direction as shown in Figure 19, a point 1902 beside the final location is chosen.

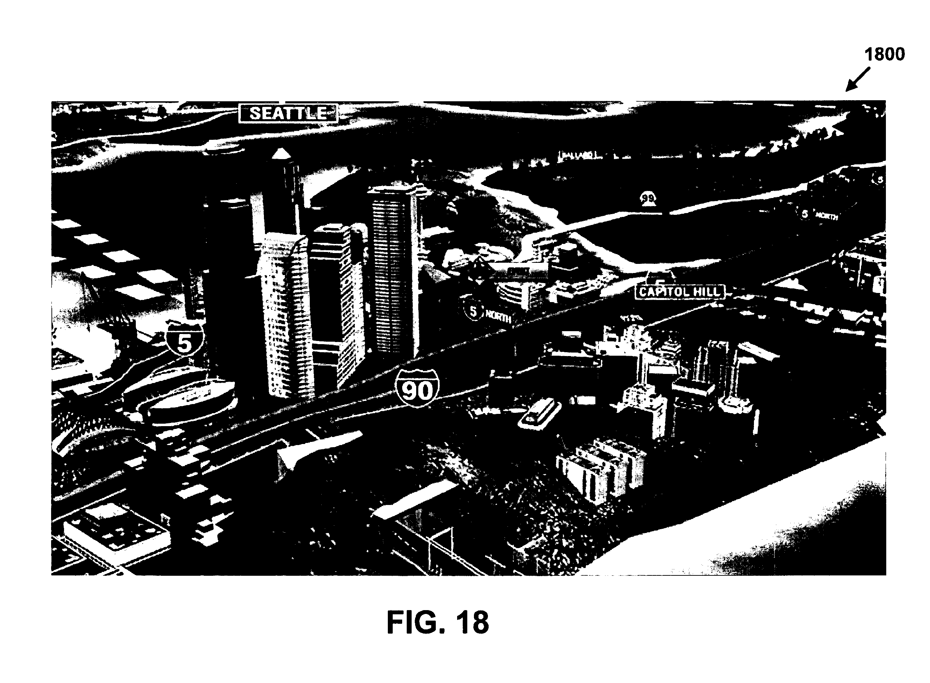

The third part of the camera movement is to the final position and orientation of the second 3D view 1408. On the path of movement, the camera's altitude is adjusted to the final altitude. This altitude is usually lower since the first movement step was to move to an altitude that is higher than the first view altitude. The horizontal position of the camera is also moved to the final location on this movement part. Furthermore, the camera orientation is changed to match the final orientation. Figure 18 shows the final position and orientation of the second 3D view. Relative to Figure 17, Figure 18 depicts that the camera altitude is lower and the camera orientation is changed. When the camera reaches this final position (as evaluated in 210), the camera movement is complete.

In the 3D to 3D transition, the first and second views are the same type as evaluated at block 206, so the method 200 skips block 208 regarding adjusting the transparency and moves on to block 210 to evaluate if the movement is complete. Accordingly, Figures 16 and 17 do not show any objects with transparency introduced due to of the transition.

The virtual camera movement parameters may be configured via configuration files and/or user interface input. The virtual camera movement parameters include the rate of movement of the virtual camera, the virtual camera angle relative to the ground, and the point at which fading of the first view elements begins. Other parameters may also be specified.

Beneficially, when switching from the presentation of one geographic traffic graphic type visualization (e.g., a 2D map) to another type of geographic type visualization (e.g., a 3D world view), the viewer has context regarding the geographic location of the second graphic. In other words, the geographic transition allows the viewer to better understand what view will be presented next by seeing the direction in which the virtual camera is moving to show the next view. Additionally, the geographic transition provides a more interesting viewing experience.

It is intended that the foregoing detailed description be regarded as illustrative rather than limiting and that it is understood that the following claims including all equivalents are intended to define the scope of the invention. For example, while view transitions in a traffic report were described, the view transitions may be used in other graphic presentations, such as those used in video games. The claims should not be read as limited to the described order or elements unless stated to that effect. Therefore, all embodiments that come within the scope and spirit of the following claims and equivalents thereto are claimed as the invention.

## Claims

1. A method of transitioning between views in a traffic report that includes a visual depiction of a geographical area, comprising:
receiving a selection of a first view in a virtual world to be included in a traffic report;
receiving a selection of a second view in the virtual world to be included in the traffic report, wherein at least one of the first and second views is a 3D view; and
during the traffic report, moving from the first view to the second view such that a transition from the first view to the second view includes elements of both views for at least part of the transition.

2. The method of claim 1, wherein the transition is from a 2D view to a 3D view.

3. The method of claim 1, wherein the transition is from a 3D view to a 2D view.

4. The method of claim 1, wherein the transition is between two 3D views.

5. The method of claim 1, wherein the transition includes fading out the elements of the first view while moving to the second view.

6. The method of claim 1, wherein moving includes changing altitude of a virtual camera at the first view.

7. The method of claim 1, wherein moving includes changing a direction of a virtual camera towards the second view.

8. The method of claim 1, wherein moving includes orienting a virtual camera to align with the second view.

9. A system for transitioning between views in a traffic report that includes a visual depiction of a geographical area, comprising:
a data collection center that receives data regarding traffic conditions; and
a traffic report application that receives a traffic condition data output from the data collection center and generates a video output for a traffic report depicting at least two types of geographic graphics, wherein at least one type of geographic graphics is a 3D view of a virtual world, wherein a transition between graphic types includes moving from a first part of the virtual world to a second part of the virtual world, and wherein for at least part of the transition both the first and second parts of the virtual world are visible in the traffic report.

10. The system of claim 9, wherein moving includes rotating a virtual camera towards a direction of the second part of the virtual world.

11. The system of claim 9, wherein moving includes fading out elements of the first part of the virtual world while moving to the second part of the virtual world.

12. A computer program which, when executed by a processor, carries out a method according to any one of claims 1 to 8.
